# EUROPÄISCHE PATENTANMELDUNG

(11) **EP 3 115 811 A1**
(43) Veröffentlichungstag der Anmeldung: **11.01.2017**
(21) Anmeldenummer: 16001496.5
(22) Anmeldetag: 05.07.2016
(51) Int. Cl.: G01V 5/00

(54) **VORRICHTUNG ZUR DETEKTION VON WAFFEN IN EINEM GEPÄCKSTÜCK**

(30) Priorität: 10.07.2015 DE 202015103628 U
(71) Anmelder: CTG Carbon Team Germany GmbH, 97828 Marktheidenfeld (DE)
(72) Erfinder: KREUZER, Markus, 97828 Marktheidenfeld (DE)
(74) Vertreter: Petri, Lars

(57) **Zusammenfassung**

Vorrichtung (1) zur Detektion von Waffen in einem Gepäckstück (3), welche Vorrichtung eine Gepäckaufnahme zur Anordnung eines zu durchsuchenden Gepäckstücks, eine erste Detektionseinheit (4) mit einer Röntgenquelle (41) und einem Röntgendetektor (42), wobei die Röntgenquelle mit dem Röntgendetektor derart zusammenwirkt, um eine Waffe aus einem Röntgenstrahlen absorbierenden Material in einem zu durchsuchenden Gepäckstück an der Gepäckaufnahme zu ermitteln, und eine zweite Detektionseinheit (5), die derart ausgebildet ist, um eine Waffe aus einem nicht Röntgenstrahlen absorbierenden Material in einem zu durchsuchenden Gepäckstück an der Gepäckaufnahme zu ermitteln, und eine Ausgabeeinheit (8) zur Erzeugung eines Signals bei der Detektion einer im Gepäckstück befindlichen Waffe durch die erste Detektionseinheit oder die zweite Detektionseinheit.

## Beschreibung

Die Erfindung betrifft eine Vorrichtung zur Detektion von Waffen in einem Gepäckstück, die insbesondere an Sicherheitsschleusen auf Flughäfen eingesetzt werden kann.

Der Gegenstand der Erfindung liegt im technischen Gebiet der Sicherheitstechnik zur Kontrolle von Personen in Bezug auf das Mitführen von Waffen. Insbesondere bezieht sich die Erfindung auf das Sichtbarmachen von mitgeführten Blankwaffen oder Schusswaffen zum Beispiel bei der Sicherheitskontrolle auf Flughäfen.

Beim Eincheckverfahren für Flugpassagiere kommt der Fluggast mit seinem Gepäck am Flughafen an und wird dort von seiner gebuchten Fluggesellschaft am für den entsprechenden Flug vorgesehenen Schalter empfangen. Am Schalter bekommt er seine Boardkarte, mit der er zunächst einen Sicherheitsbereich des Flughafens und schließlich das Flugzeug betreten kann. Außerdem gibt er am Schalter sein Reisegepäck auf, das separat vom Fluggast im Frachtraum des Flugzeugs transportiert wird. Die Gepäckstücke des Reisegepäcks werden auf dem Weg zum Frachtraum des Flugzeugs stichprobenmäßig oder insgesamt durchleuchtet, um festzustellen, ob gefährliche oder gefährdende Inhalte mit transportiert werden sollen. Das Reisegepäck wird getrennt vom Fluggast zum Flugzeug gebracht und dort eingeladen. Daher besteht für einen Fluggast keine Möglichkeit, einen gefährlichen Gegenstand aus dem Reisegepäck mit an seinem Sitzplatz im Flugzeug zu bringen.

Waffen sind gefährliche Gegenstände, die zum Bedrohen bzw. Verletzen von Menschen und damit zum Entführen eines Flugzeugs geeignet sind. Zum Beispiel Blankwaffen (z.B. Messer) und Schusswaffen (z.B. Bolzenabschussvorrichtung, Harpune, Armbrust).

Nachdem der Fluggast sein Reisegepäck aufgegeben hat, geht er zum entsprechenden Abfluggate, um sich in das dort parkende Flugzeug zu setzen. Das Abfluggate befindet sich im Sicherheitsbereich des Flughafens. Der Sicherheitsbereich kann nur durch eine Sicherheitsschleuse, an der eine Sicherheitsüberprüfung stattfindet, betreten werden. Die Sicherheitsüberprüfung wird für den Fluggast und für sein Handgepäck durchgeführt. Mit einer Überprüfung wird der Fluggast nach gefährlichen Gegenständen am Körper durchsucht und bei einer weiteren Überprüfung wird das Handgepäck nach gefährlichen Gegenständen durchsucht. Das Handgepäck wird im Unterschied zum Reisegepäck mit in den Sicherheitsbereich und anschließend ins Flugzeug genommen.

Vor der Überprüfung des Fluggasts nach gefährlichen Gegenständen am Körper, legt der Fluggast alle metallischen Gegenstände zum Handgepäck. Dazu werden Uhren, Gürtel, Schuhe, Schlüsselbund und Geldbeutel auf ein das Handgepäck durch die Sicherheitsschleuse transportierendes Förderband gelegt.

Die Überprüfung des Fluggasts nach gefährlichen Gegenständen am Körper erfolgt berührungslos. Bis vor kurzem erfolgte diese Kontrolle ausschließlich mit Metalldetektoren. Solche Metalldetektoren werden vom Sicherheitspersonal entlang des zu untersuchenden Körpers geführt und geben einen Warnton ab, wenn metallische Gegenstände in der Nähe sind. Metalldetektoren können auch zum Durchlaufen in Form eines Tors ausgebildet sein. Das Problem solcher Metalldetektoren ist, dass ausschließlich gefährliche Gegenstände aus Metall damit ermittelt werden. Jedoch sind Waffen aus Kohlefaser-Verbundwerkstoff, wie ein Messer aus Kohlefaser-Verbundwerkstoff, damit nicht detektierbar.

Als Kohlefaser-Verbundwerkstoff wird ein Material bezeichnet, bei dem Gewebematten aus Kohlenstofffasern in eine Matrix aus z.B. Epoxidharz eingebunden werden. Dieser Werkstoff ist extrem belastbar und gleichzeitig sehr leicht. Zum Beispiel sind Messer komplett aus Kohlefaser-Verbundwerkstoff mit geringem Gewicht zur Anwendung im Notfall für Bergsteiger im Markt erhältlich. Aus Kohlefaser-Verbundwerkstoff lassen sich außerdem auch Schusswaffen, beispielsweise in Form einer Bolzenabschussvorrichtung anfertigen.

Sogenannte Körperscanner finden zunehmend Verbreitung in Sicherheitsschleusen von Flughäfen. Diese Körperscanner verwenden Terahertzstrahlung, um am Körper versteckte Gegenstände festzustellen. Als Terahertzstrahlung wird elektromagnetische Strahlung bezeichnet mit Frequenzen zwischen 0,1 und 10 Terahertz, mit anderen Worten zwischen Mikrowellen und Infrarotlicht. Ein Terahertzsender bestrahlt den menschlichen Körper, an dessen Oberfläche die Terahertzstrahlung reflektiert wird. Ein Empfänger nimmt die reflektierte Terahertzstrahlung zur Auswertung auf. So können Gegenstände detektiert werden, deren Reflektion für Terahertzstrahlung unterschiedlich ist, zu der Reflektion der menschlichen Haut. Die Terahertzstrahlung wird an elektrisch leitenden Gegenständen aus Metall oder Kohlefaser-Verbundwerkstoff im Vergleich zur menschlichen Haut anders reflektiert. So können am Körper befindliche Waffen aus Kohlefaser-Verbundwerkstoff festgestellt werden. Bei Körperscannern ergibt sich das Problem, dass alle nicht am Körper getragenen Waffen prinzipiell von der Erfassung durch die Kontrolle ausgeschlossen sind.

Bei der konventionellen Handgepäckkontrolle werden die Gepäckstücke auf einem Förderband transportiert und in einem Transporttunnel mit Röntgenstrahlen durchleuchtet. Üblicherweise wird dazu das Handgepäck vom Fluggast in einer Schale auf ein Förderband gelegt. Auf diesem Förderband wird das Handgepäck dann durch eine von einem Röntgenstrahl durchleuchteten Bereich gefahren. Dort wird ein flächiger Röntgenstrahl auf einen Detektor gelenkt, welcher Detektor mit einer Bildausgabeeinheit verbunden ist. Der Detektor ermittelt die Absorption des Röntgenstrahls durch im Gepäckstück befindliche Gegenstände. Die Bildausgabeeinheit erzeugt aufgrund der detektierten Abschwächung des Röntgenstrahls eine Darstellung der im Gepäckstück lokalisierten Gegenstände in einer Durchleuchtungsaufnahme. Zur Bildgebung werden zusammenhängende Gegenstände einheitlich eingefärbt. Bei Röntgenscannern besteht ein Sicherheitsproblem darin, dass in dieser Durchleuchtungsaufnahme Kohlefaser-Verbundwerkstoffe nicht sichtbar sind. In Testaufnahmen mit Geräten die im Betrieb eine Strahlungsenergie im Bereich von ca. 50 keV verwenden sind 1-2 mm dicke Scheiben aus einem Standardkarbonplattenmaterial, oder ein Karbonmesser der Firma Puma nicht sichtbar. Bei der Herstellung von Kohlefaser-Verbundwerkstoff gibt es Fasermischungen aus Glasfaser und Kohlefaser, die im Röntgenbild sichtbar sind, jedoch lassen sich reine Kohlefaser-Verbundwerkstoffe nur mit Kohlefasern ohne weiteres herstellen.

Eine Sicherheitslücke besteht nun darin, dass ein krimineller Passagier, der ein Flugzeug entführen möchte, eine Waffe aus Kohlefaser-Verbundwerkstoff an Bord eines Flugzeugs bringen kann, indem er die Waffe aus Kohlefaser-Verbundwerkstoff nicht am Körper trägt, sondern im Handgepäck transportiert.

Die Aufgabe besteht nun darin eine Vorrichtung zur Detektion von Waffen in einem Gepäckstück bereitzustellen, die die genannten Nachteile überwindet und insbesondere die Sicherheitslücke schließt, dass ein krimineller Passagier eine Waffe aus Kohlefaser-Verbundwerkstoff in den Sicherheitsbereich eines Flughafens schmuggelt.

Diese Aufgabe wird durch die Vorrichtung zur Detektion von Waffen in einem Gepäckstück gemäß Anspruch 1 gelöst. Vorteilhafte Ausgestaltungen bilden den Gegenstand der jeweiligen Unteransprüche.

Die Erfindung betrifft eine Vorrichtung zur Detektion von Waffen in einem Gepäckstück, welche Vorrichtung eine Gepäckaufnahme, auf die ein zu durchsuchendes Gepäckstück gelegt werden kann, eine erste Detektionseinheit mit einer Röntgenquelle und einem Röntgendetektor, wobei die Röntgenquelle mit dem Röntgendetektor derart zusammenwirkt, um eine Waffe aus einem Röntgenstrahlen absorbierenden Material in einem zu durchsuchenden Gepäckstück an der Gepäckaufnahme zu ermitteln, und eine zweite Detektionseinheit, die derart ausgebildet ist, um eine Waffe aus einem nicht Röntgenstrahlen absorbierenden Material in einem zu durchsuchenden Gepäckstück an der Gepäckaufnahme zu ermitteln, und eine Ausgabeeinheit zur Erzeugung eines Signals bei der Detektion einer im Gepäckstück befindlichen Waffe durch die erste Detektionseinheit oder die zweite Detektionseinheit.

Das Handgepäck wird in die Gepäckaufnahme gelegt und von der ersten Detektionseinheit mit der Röntgenquelle und dem Röntgendetektor wird ein Durchleuchtungsbild des Inhalts des Handgepäcks erzeugt. Solche Durchleuchtungsbilder beruhen auf der Abschwächung von Röntgenstrahlen. Eine Waffe aus einem nicht Röntgenstrahlen absorbierenden Material, wie Kohlefaser-Verbundwerkstoff, wird in der ersten Detektionseinheit nicht ermittelt. Die zweite Detektionseinheit ermittelt eine Waffe aus einem nicht Röntgenstrahlen absorbierenden Material in einem zu durchsuchenden Gepäckstück an der Gepäckaufnahme. Es können dabei auch andere Gegenstände aus einem nicht Röntgenstrahlen absorbierenden Material detektiert werden. Die Überprüfung durch das Sicherheitspersonal stellt dann abschließend fest, ob es sich um eine Waffe handelt, oder nicht.

Die beschriebene Vorrichtung schließt die Sicherheitslücke, bei der ein krimineller Passagier eine Waffe aus Kohlefaser-Verbundwerkstoff in den Sicherheitsbereich eines Flughafens schmuggeln kann, indem im Handgepäck eine Waffe aus einem Kohlefaser-Verbundwerkstoff ermittelt wird. Auch wenn der kriminelle Passagier die Waffe aus nicht Röntgenstrahlen absorbierenden Material nicht am Körper trägt, sondern im Handgepäck transportiert, wird die Waffe erkannt. In jedem Fall kann schon das Erkennen eines Gegenstands aus einem nicht Röntgenstrahlen absorbierenden Material eine Durchsuchung des Gepäckstücks durch das Sicherheitspersonal zur Ermittlung einer Waffe aus einem nicht Röntgenstrahlen absorbierenden Material auslösen. Jeder Gegenstand aus einem nicht Röntgenstrahlen absorbierenden Material kann zunächst als Waffe eingestuft werden. Nicht Röntgenstrahlen absorbierenden Material sind alle Materialien, die bei der Röntgendurchleuchtung nicht abgebildet werden, also zum Beispiel Kohlefaser-Verbundwerkstoffe.

In einem bevorzugten Beispiel umfasst die zweite Detektionseinheit dazu eine Terahertzstrahlungsquelle und einen Terahertzstrahlungsdetektor, die beide derart zusammenwirken, um eine Waffe aus einem Kohlefaser-Verbundwerkstoff im zu durchsuchenden Gepäckstück an der Gepäckaufnahme zu ermitteln. Kohlefaser-Verbundwerkstoff ist ein Beispiel für ein nicht Röntgenstrahlen absorbierendes Material. Dazu wird vergleichbar zu einem Körperscanner die reflektierte Terahertzstrahlung im Terahertzstrahlungsdetektor aufgenommen. Zum Beispiel können dazu aus der Sichtbarmachung von dreidimensionalen Gegenständen am Körper von Menschen (DE 10 2012 006 670 A1) bekannte Abbildungsverfahren eingesetzt werden.

Besonders bevorzugt umfasst die zweite Detektionseinheit einen Reflektor. Der Reflektor ist derart ausgebildet und angeordnet, um aus der Terahertzstrahlungsquelle kommende Terahertzstrahlung in den Terahertzstrahlungsdetektor zu lenken (ähnlich wie die Körperoberfläche beim Körperscanner). Der Reflektor ist im einfachsten Fall eine elektrisch leitfähige Platte mit einer (konstanten) Leitfähigkeit über die gesamte Oberfläche. Besonders vorteilhaft hat diese eine zu Kohlefaser-Verbundwerkstoff derart abweichende elektrische Leitfähigkeit, damit Gegenstände daraus einen gut sichtbaren Schatten erzeugen.

Bevorzugt umfasst die Vorrichtung einen Gehäusetunnel, in dem die erste Detektionseinheit und die zweite Detektionseinheit angeordnet ist. Die Gepäckaufnahme umfasst ein Transportband, um ein zu durchsuchendes Gepäckstück durch den Gehäusetunnel zu transportieren. Der Gehäusetunnel kann als Abschirmung gegen ein Austreten der Röntgenstrahlung aus der ersten Detektionseinheit eingesetzt werden.

Bevorzugt ist die erste Detektionseinheit in Transportrichtung des Transportbands vor der zweiten Detektionseinheit angeordnet. Bei dieser Anordnung kann zunächst eine Waffe aus Röntgenstrahlen absorbierenden Material festgestellt werden. Danach wird geprüft, ob eine Waffe aus einem nicht Röntgenstrahlen absorbierenden Material darin ist. Außerdem, findet man bei der zweiten Prüfung an einer Stelle einen Gegenstand, an welcher Stelle bei der ersten Prüfung kein Gegenstand war, lässt sich folgern, dass ein Gegenstand aus einem nicht Röntgenstrahlen absorbierenden Material vorhanden ist. Dies wäre schon ein Grund für eine zwingende händische Durchsuchung des Gepäckstücks nach Waffen.

Gemäß einem bevorzugten Aspekt der Vorrichtung umfasst die Ausgabeeinheit einen Bildschirm, um eine von der Ausgabeeinheit erzeugte Abbildung der im Gepäckstück ermittelten Waffe darzustellen. Die graphische Ausgabe kann zudem eine Bildbearbeitung umfassen. Zum Beispiel lassen sich damit bei der Röntgendurchleuchtung Bereiche gleicher Abschirmung identisch einfärben.

Ein vorteilhafter Aspekt sieht vor, dass die Ausgabeeinheit eine Bildverarbeitungseinheit umfasst, um mehrere von der Ausgabeeinheit erzeugte Abbildungen der im Gepäckstück befindlichen Waffe zu vergleichen. So lassen sich verschiedene Bilder aus der ersten Detektionseinheit und aus der zweiten Detektionseinheit "übereinander" legen und vergleichen.

Bevorzugt wird von der Bildverarbeitungseinheit eine Abbildung der von der ersten Detektionseinheit im Gepäckstück ermittelten Waffen und eine Abbildung der von der zweiten Detektionseinheit im Gepäckstück ermittelten Waffen graphisch verarbeitet, um einen Gegenstand aus einem nicht Röntgenstrahlen absorbierenden Material an einer Stelle zu finden, an welcher Stelle bei der Prüfung durch die erste Detektionseinheit nichts zu sehen war, aber bei der Prüfung durch die zweite Detektionseinheit.

Ein weiterer Aspekt sieht vor, dass die Ausgabeeinheit eine Alarmeinheit umfasst, die derart ausgebildet ist, um ein Alarmsignal auszugeben, wenn eine von der Ausgabeeinheit erzeugte Abbildung der ersten Detektionseinheit keine im Gepäckstück befindliche Waffe darstellt und eine von der Ausgabeeinheit erzeugte Abbildung der zweiten Detektionseinheit eine im Gepäckstück befindliche Waffe darstellt. So wird ein Alarm erzeugt wenn Waffen aus einem nicht Röntgenstrahlen absorbierenden Material ermittelt werden.

Gemäß einem weiteren Aspekt betrifft die Erfindung eine Sicherheitsschleuse, bestehend aus einem Köperscanner zur Überprüfung von Personen auf das Mitführen von Waffen am Körper und einer Vorrichtung zur Detektion von Waffen in einem Gepäckstück, wie hier beschreiben.

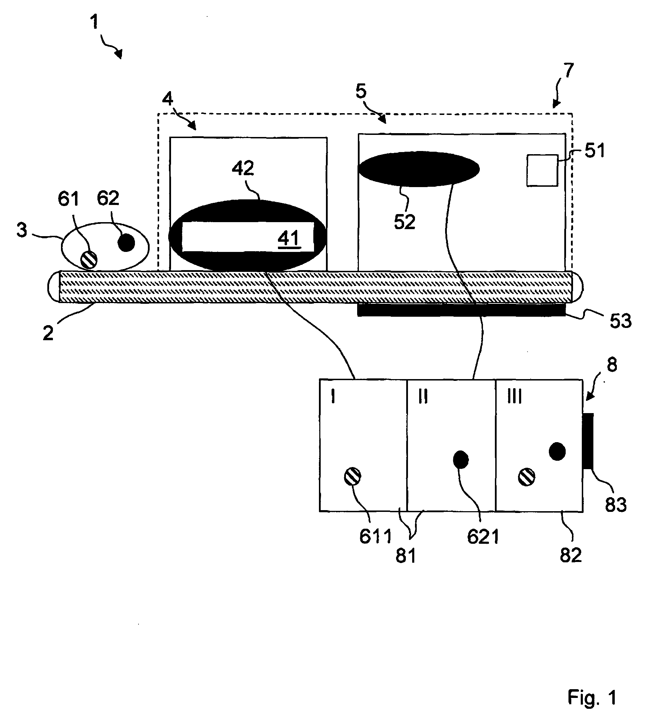

Im Folgenden wird die Erfindung in Bezug auf Fig. 1 beispielhaft erläutert. Fig. 1 zeigt eine Vorrichtung 1 zur Detektion von Waffen aus einem Röntgenstrahlen absorbierenden Material 61 und zur Detektion von Waffen aus einem nicht Röntgenstrahlen absorbierenden Material 62 in einem Gepäckstück 3 zum Beispiel für das Handgepäck auf einem Flughafen. Vorrichtung 1 hat ein Transportband 2 als Gepäckaufnahme, auf das ein auf den Inhalt von Waffen zu durchsuchendes Gepäckstück 3 gelegt wird.

Vorrichtung 1 umfasst ferner eine erste Detektionseinheit 4 mit einer Röntgenquelle 41 und einem Röntgendetektor 42. Die Röntgenquelle 41 wirkt mit dem Röntgendetektor 42 derart zusammen, um eine Waffe 61 aus einem Röntgenstrahlen absorbierenden Material in einem zu durchsuchenden Gepäckstück 3 an der Gepäckaufnahme 2 zu ermitteln. Dazu wird eine Durchleuchtungsaufnahme aufgrund der Absorption des aus Röntgenquelle 41 kommenden und direkt in Röntgendetektor 42 tretenden Röntgenstrahls erstellt.

Vorrichtung 1 umfasst ferner eine zweite Detektionseinheit 5, die derart ausgebildet ist, um Waffe 62 aus einem nicht Röntgenstrahlen absorbierenden Material im zu durchsuchenden Gepäckstück 3 an Gepäckaufnahme 2 zu ermitteln, indem eine Terahertzstrahlungsquelle 51 und einen Terahertzstrahlungsdetektor 52 vorgesehen sind. Beispielsweise kann in der zweiten Detektionseinheit dazu aus der Sichtbarmachung von dreidimensionalen Gegenständen am Körper von Menschen (DE 10 2012 006 670 A1) bekannte Abbildungsverfahren verwirklicht werden. Im vorliegenden Beispiel umfasst Vorrichtung 1 ferner einen Reflektor 53, der die Terahertzstrahlung aus der Terahertzstrahlungsquelle 52 in den Terahertzstrahlungsdetektor 52 mit gleichförmiger Intensität reflektiert. So wird der detektierte Hintergrund an Terahertzstrahlung gleichförmig und Waffen (Gegenstände) von dazu verschiedener Reflektivität können unterschieden werden.

Befindet sich nun zum Beispiel ein Messer aus Kohlefaser-Verbundwerkstoff (als Beispiel für eine Waffe 62 aus nicht Röntgenstrahlen absorbierenden Material) im Gepäckstück 3, kann dessen Reflektion der Terahertzstrahlung als Abweichung gegenüber dem Hintergrund ermittelt werden. Verschiedene Reflektionen resultieren aus unterschiedlichen elektrischen Eigenschaften (wie Leitfähigkeiten der Oberfläche).

Vorrichtung 1 umfasst ferner einen Gehäusetunnel 7, in dem erste Detektionseinheit 4 und zweite Detektionseinheit 5 angeordnet ist. Das zu durchsuchende Gepäckstück 3 wird auf dem Transportband 2 durch den Gehäusetunnel 7 transportiert.

Die Ausgabeeinheit 8 erzeugt eine Abbildung des im Gepäckstücks 3 aus der ersten Detektionseinheit 4 sowie eine Abbildung des im Gepäckstücks 3 aus der zweiten Detektionseinheit 5, die auf einem Bildschirm 81 angezeigt wird. Mit einer Bildverarbeitungseinheit 82 können beide Abbildungen 611 graphisch verglichen werden, um zu ermitteln ob sich ein Gegenstand (Waffe) aus einem nicht Röntgenstrahlen absorbierenden Material im Gepäckstück befindet. Ausgabeeinheit 8 umfasst eine Alarmeinheit 83, die ein akustisches Alarmsignal ausgibt, wenn ein Gegenstand (Waffe) aus einem nicht Röntgenstrahlen absorbierenden Material zu sehen ist. Wird ein (insbesondere isolierter) Gegenstand aus einem nicht Röntgenstrahlen absorbierenden Material erkannt, ist zur Sicherheit immer von einer Waffe auszugehen und eine händische Überprüfung durch das Sicherheitspersonal gefordert.

Vorrichtung 1 schließt die Sicherheitslücke, bei der ein krimineller Passagier eine Waffe 62 aus Kohlefaser-Verbundwerkstoff in den Sicherheitsbereich eines Flughafens schmuggeln kann, indem im Handgepäck 3 eine Waffe 62 aus einem Kohlefaser-Verbundwerkstoff ermittelt wird. Auch wenn der kriminelle Passagier die Waffe 62 aus Kohlefaser-Verbundwerkstoff nicht am Körper trägt, sondern im Handgepäck 3 transportiert, wird die Waffe 62 festgestellt.

## Patentansprüche

1. Vorrichtung (1) zur Detektion von Waffen (61, 62) in einem Gepäckstück (3), welche Vorrichtung (1)
eine Gepäckaufnahme (2) zur Anordnung eines zu durchsuchenden Gepäckstücks (3),
eine erste Detektionseinheit (4) mit einer Röntgenquelle (41) und einem Röntgendetektor (42), wobei die Röntgenquelle (41) mit dem Röntgendetektor (42) derart zusammenwirkt, um eine Waffe (61) aus einem Röntgenstrahlen absorbierenden Material in einem zu durchsuchenden Gepäckstück (3) an der Gepäckaufnahme (2) zu ermitteln, und
eine zweite Detektionseinheit (5), die derart ausgebildet ist, um eine Waffe (62) aus einem nicht Röntgenstrahlen absorbierenden Material in einem zu durchsuchenden Gepäckstück (3) an der Gepäckaufnahme (2) zu ermitteln, und
eine Ausgabeeinheit (8) zur Erzeugung eines Signals bei der Detektion einer im Gepäckstück befindlichen Waffe (61, 62) durch die erste Detektionseinheit (4) oder die zweite Detektionseinheit (5).

2. Vorrichtung (1) nach Anspruch 1, wobei die zweite Detektionseinheit (5) eine Terahertzstrahlungsquelle (51) und einen Terahertzstrahlungsdetektor (52) umfasst, die beide derart zusammenwirken, um eine Waffe aus einem Kohlefaser-Verbundwerkstoff (62) im zu durchsuchenden Gepäckstück (3) an der Gepäckaufnahme (2) zu ermitteln.

3. Vorrichtung (1) nach Anspruch 1 oder 2, wobei die zweite Detektionseinheit (5) einen Reflektor (53) umfasst, welcher Reflektor (53) derart angeordnet ist, um aus der Terahertzstrahlungsquelle (52) kommende Terahertzstrahlung in den Terahertzstrahlungsdetektor (52) zu lenken.

4. Vorrichtung (1) nach einem der vorangehenden Ansprüche, ferner umfassend einen Gehäusetunnel (7), in dem die erste Detektionseinheit (4) und die zweite Detektionseinheit (5) angeordnet ist, und wobei die Gepäckaufnahme (2) ein Transportband umfasst, um ein zu durchsuchendes Gepäckstück (3) durch den Gehäusetunnel (7) zu transportieren.

5. Vorrichtung (1) nach Anspruch 4, wobei die erste Detektionseinheit (4) in Transportrichtung des Transportbands (2) vor der zweiten Detektionseinheit (5) angeordnet ist.

6. Vorrichtung (1) nach einem der vorangehenden Ansprüche, wobei die Ausgabeeinheit (8) einen Bildschirm (81) umfasst, um eine von der Ausgabeeinheit (8) erzeugte Abbildung (611, 621) der im Gepäckstück ermittelten Waffe (61, 62) darzustellen.

7. Vorrichtung nach Anspruch 6, wobei die Ausgabeeinheit (8) eine Bildverarbeitungseinheit (82) umfasst, um mehrere von der Ausgabeeinheit (8) erzeugte Abbildungen (611, 621) der im Gepäckstück befindlichen Waffe (61, 62) zu vergleichen.

8. Vorrichtung nach Anspruch 7, wobei die Bildverarbeitungseinheit (82) eine Abbildung (611) des Gepäckstücks (3) aus der Überprüfung mit der ersten Detektionseinheit (4) und eine Abbildung (621) des Gepäckstücks (3) aus der Überprüfung mit der zweiten Detektionseinheit (4) miteinander vergleicht.

9. Vorrichtung nach Anspruch 8, wobei die Ausgabeeinheit (8) eine Alarmeinheit (83) umfasst, die derart ausgebildet ist, um ein Alarmsignal auszugeben, wenn eine Abbildung (611) des Gepäckstücks (3) aus der Überprüfung mit der ersten Detektionseinheit (4) keine Waffe zeigt und eine Abbildung (621) des Gepäckstücks (3) aus der Überprüfung mit der zweiten Detektionseinheit (4) eine Waffe zeigt.

10. Sicherheitsschleuse bestehend aus einem Köperscanner zur Überprüfung von Personen auf das Mitführen von Waffen am Körper und einer Vorrichtung (1) zur Detektion von Waffen (61, 62) in einem Gepäckstück (3) nach einem der vorangehenden Ansprüche.
